Europäisches Patentamt

European Patent Office

Office européen des brevets

(19)

(11) Publication number: **0 416 957 A2**

# EUROPEAN PATENT APPLICATION

(12)

(21) Application number: 90309869.7

(22) Date of filing: **10.09.90**

(51) Int. Cl.⁵: **B29C 37/00**

(30) Priority: **08.09.89 IE 2876/89**

(43) Date of publication of application:
**13.03.91 Bulletin 91/11**

(84) Designated Contracting States:
**AT BE CH DE DK ES FR GB GR IT LI LU NL SE**

(71) Applicant: **H.P. Chemie Pelzer Research & Development Ltd.**
**Villa Thomas, Doneraile Walk**
**Tramore, County Waterford(IE)**

(72) Inventor: **Casey, John**
**Villa Thomas, Doneraile**
**Tramore, County Waterford(IE)**
Inventor: **Doris, Colm**
**8 Muckross Court**
**Powerscourt, County Waterford(IE)**

(74) Representative: **Brooke-Smith, Fred et al**
**STEVENS, HEWLETT & PERKINS 5 Quality**
**Court Chancery Lane**
**London WC2A 1HZ(GB)**

(54) A method and apparatus for the removal of moulded parts from a mould.

(57) The invention relates to a gripping device for removing moulded parts (1), for example low density foam parts, from a mould (20). The gripping device comprises a gripping cup (24), formed as a shell moulding, the interior of which corresponds in shape with the upper half of the moulded part so that it can fit around at least a peripheral part of the upper portion. The upper portion of the cup (24) contains at least one vacuum chamber which is connected by a vacuum inlet (11) to a vacuum source. Means may be provided for supplying compressed air to the interior of the inner portion (9) at the same time as vacuum is applied to the vacuum chamber (10), to remove the part from the mould (20). The invention also includes a method of making the gripping device, and a method of removing a part from a mould.

fig. 4

# A METHOD AND APPARATUS FOR THE REMOVAL OF MOULDED PARTS FROM A MOULD

The invention relates to a method and apparatus for the removal of moulded parts from a mould. The invention is particularly concerned with a gripping device for handling parts moulded from foamed plastics and, in particular, for handling parts moulded from medium to low-density foamed plastics.

It is known to mould parts and other objects of a wide variety of shapes and sizes from foamed plastics material, for example polyurethane foam. Such parts may be comprised of either a high density foam or a low density foam. High density foams tend to be non-porous and these parts can easily be unloaded from a mould using a number of vacuum cups mounted on a common frame. A high vacuum, low volume, vacuum pump is used as the vacuum source.

However, there is a difficulty in removing low density foam parts from moulds using vacuum cups. Low density foams are porous and their porosity is directly related to their density. It has been found that vacuum cups do not have sufficient surface area to generate enough lifting force to remove the part from the moulding tool because there is a relatively high air-flow through the part which prevents the application of sufficient vacuum to the part.

It is an object of the invention to overcome this problem and to provide a gripping device which is adapted to remove moulded parts from a mould, and which is particularly suitable for removing and handling low density foamed parts.

Accordingly, the invention provides a gripping device adapted for removing parts from a mould, the device comprising a gripping cup having a lower portion which substantially corresponds in shape with at least an upper portion of the part to be removed from the mould and which is adapted to fit around at least a peripheral part of said upper portion, a vacuum chamber located in an upper portion of the cup and a vacuum inlet communicating with the said vacuum chamber. Preferably, the lower portion of the cup is provided with one or more air in lets whereby compressed air may be fed to the lower portion of the cup to assist in separating the part from the mould.

The invention also provides a method of removing a part from a mould which comprises applying to the part a gripping cup having a lower portion which substantially corresponds in shape with at least an upper portion of the part, fitting said lower portion of the cup tightly around at least a portion of the periphery of the part, and applying vacuum to at least one vacuum chamber located in an upper portion of the cup and immediately above the part. Preferabiy, compressed air is fed to the lower portion of the cup to assist in removing the part from the mould.

In accordance with a further aspect the invention provides a method of manufacturing a gripping device as described above which comprises the steps of

i) preparing a negative shell moulding of an inner half of a moulding tool,

ii) building a layer of material on the upper surface of said negative shell moulding,

iii) taking a positive shell moulding from the negative shell mouldlng, and

iv) removing said layer of material to form a vacuum chamber in said positive shell moulding.

An embodiment of the invention is hereinafter described with reference to the accompanying drawings wherein

Figure 1 is a perspective view of a low density foamed polyurethane part;

Figure 2 is a cross-sectional view of a mould for moulding the part of Figure 1;

Figures 3A to 3D illustrate the steps used in the manufacture of the gripper device of the invention;

Figure 4 is a sectional view of the gripper device of the invention shown gripping the part of Figure 1;

Figure 5 is a perspective view from above of the device of Figure 4;

Figure 6 is an elevation showing use of the gripper device of Figure 4 mounted on the arm of a robot for use in the automatic unloading of parts from a mould; and

Figure 7 is a perspective view of the gripper device mounted on the arm of a robot.

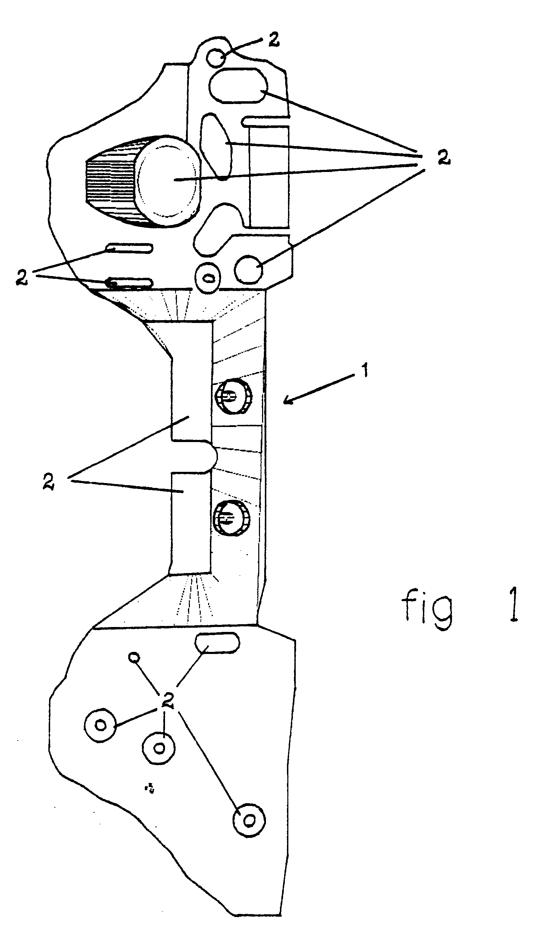

Referring to Figure 1 of the drawings, this illustrates a foamed part 1 moulded from polyurethane, for use in the automotive industry. This part, although small, contains a large number of holes 2 and has constant variations in thickness across its surface. For example, the part may measure approximately 1150 mm in length, by 320 mm in width, and from 8 mm to 40 mm in thickness. The part 1 is made from a medium density foam which is a difficulty part to demould by hand without damaging it, and which also cannot successfully be demoulded using conventional vacuum cups.

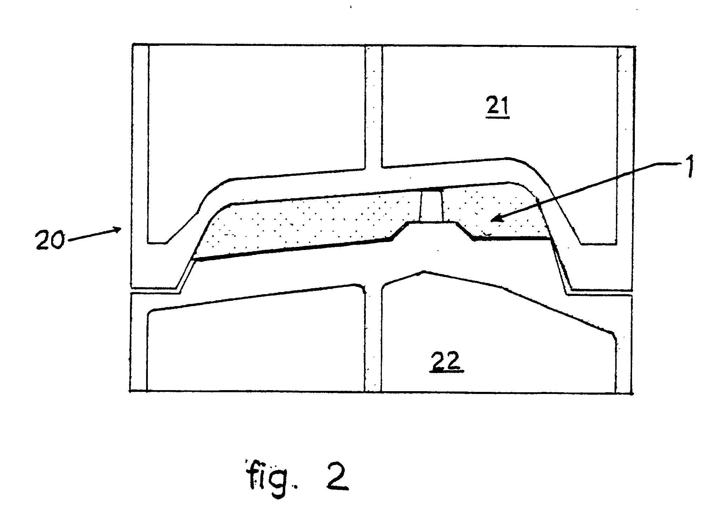

Figure 2 is a section through a typical mould 20 for use in moulding the part 1. Essentially, the mould comprises an upper mould tool 21 and a lower mould tool 22 which are closed together during the moulding process, and which separate to permit the moulded part to be released from the mould.

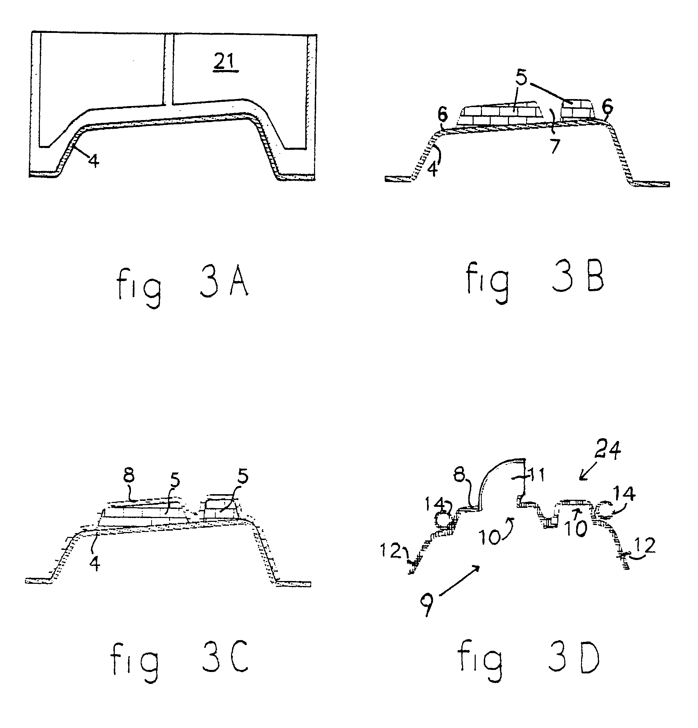

The method of manufacturing a gripper device of the invention for removing the part of Figure 1 from a mould is illustrated in stepwise fashion in Figure 3. Figure 3A shows the upper half 21 of the mould for use in moulding the part of Figure 1. A negative moulding 4 of the upper half of this tool is made by laying up to four layers of glassfibre cloth and resin in the tool as illustrated in Figure 3A, and allowing the moulding to harden. The hardened moulding 4 is then removed from the upper half of the tool.

As illustrated in Figure 3B, a layer 5 of isopon, approximately 25 to 35 mm in thickness, is built upon the upper surface of the moulding 4 except for a border 6, about 50 mm in width, around the periphery of the upper surface of the moulding 4. The layer 5 is also omitted at locations where there are through holes 2 in the part to be moulded.

As illustrated in Figure 3C a further moulding 8 is prepared by laying layers of glassfibre cloth and resin over the negative moulding 4 and its built-up parts 5. The glassfibre is hardened, and moulding 8 is detached from the negative moulding 4 and is used to form the gripping device of the invention as illustrated in Figure 3D.

The gripping device 24 of the invention illustrated in Figure 3D thus comprises a lower portion 9 which substantially corresponds in shape to the interior of the mould tool 21 and thus to the part to be moulded. A hollow upper portion 10 of the moulding 8, which corresponds to the shape of the built-up areas 5 in Figure 3B, is intended for use as a vacuum chamber or vacuum chambers. Furthermore, one or more vacuum inlet pipes 11 are fitted to the top surface of the moulding 8 and lead into the vacuum chamber(s) 10. A plurality (for example up to 20) pipes which typically are 3 mm in diameter, are connected to apertures 12 around the lower peripheral edge of the moulding 8. These pipes are connected to a central manifold (not shown) to which is supplied compressed air; A tubular frame 14 which, for example, may be constructed from aluminium framework, is fitted to an upper portion of moulding 8 to confer rigidity on the moulding and to provide a means for connecting it to a lifting arm, as described hereinafter.

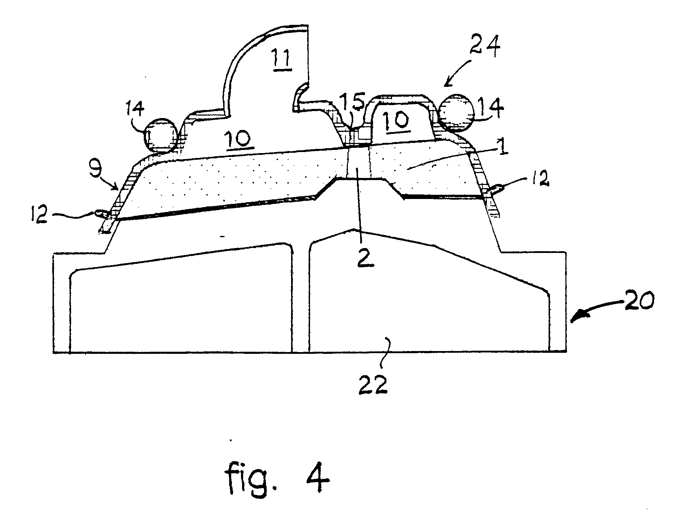

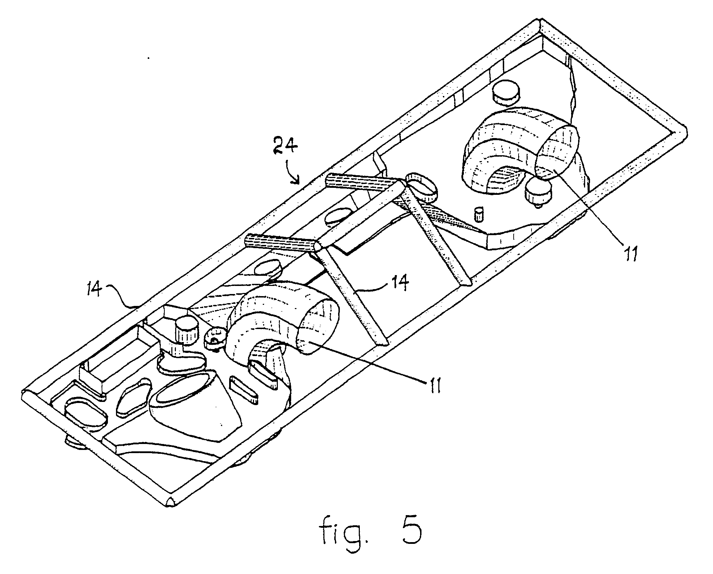

Use of the gripping device 24 of Figure 3D in removing a part 1 from the lower tool 22 of a mould 20 is illustrated in Figure 4. It will be noted that lower portion 9 of a gripping device completely surrounds the periphery of part 1. The upper portion 10 of the gripping device is provided with downwardly depending inserts 15. A plurality of inserts 15 may be provided as needed. The purpose of these inserts is to block-off any holes 2 in the part 1 which may be a source of vacuum leakage. Furthermore, the inserts assist in preventing the part from collapsing into the gripping cup when vacuum is applied to the vacuum chambers 10. The vacuum inlet pipe 11 suitably has a diameter of about 4 inches. A number of these pipes may be provided and further pipe branches (for example 1 inch in diameter) may be added to each of the vacuum in lets to apply vacuum to areas within the vacuum chamber 10 where vacuum force might otherwise be insufficient. When it is desired to remove the part 1 from the mould the gripper device is fitted over the top part of the part 1 as described above, vacuum is applied to vacuum chambers 10, and simultaneously compressed air is fed, through apertures 12, to the interior of the mould, preferably at a location adjacent the joint between the part 1 and the upper surface of the lower mould tool 22, to assist in separating the part 1 from the tool. The vacuum inlet pipes 11, and the tubular frame 14 for attaching the device to the arm of a robot are shown more clearly in Figure 5, which is a view of the gripper device from above.

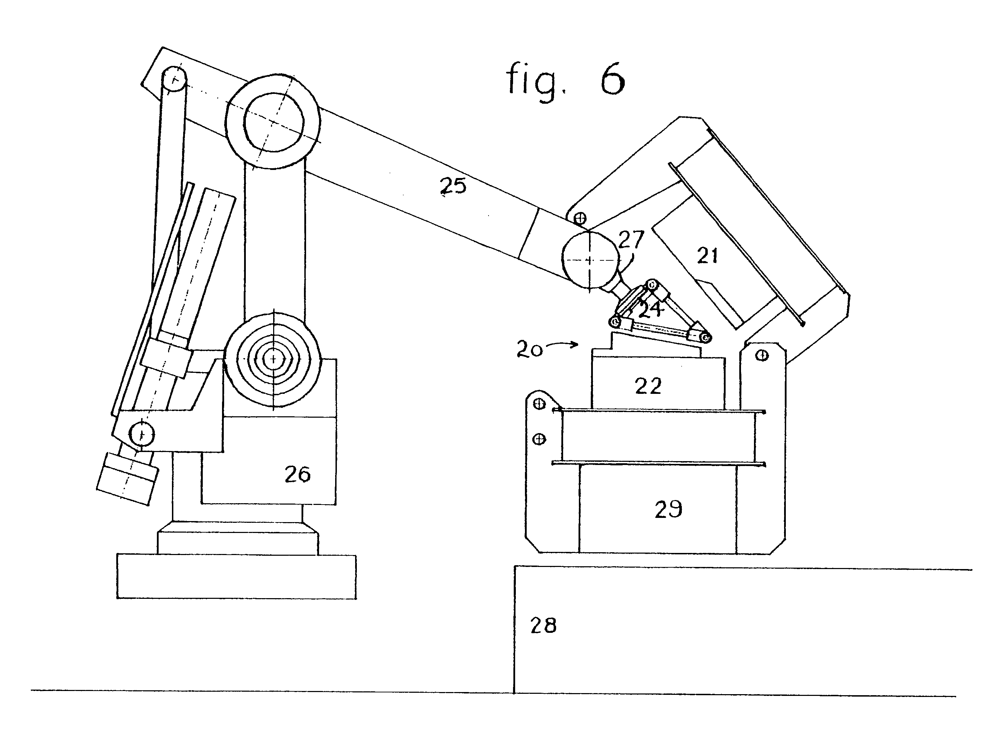

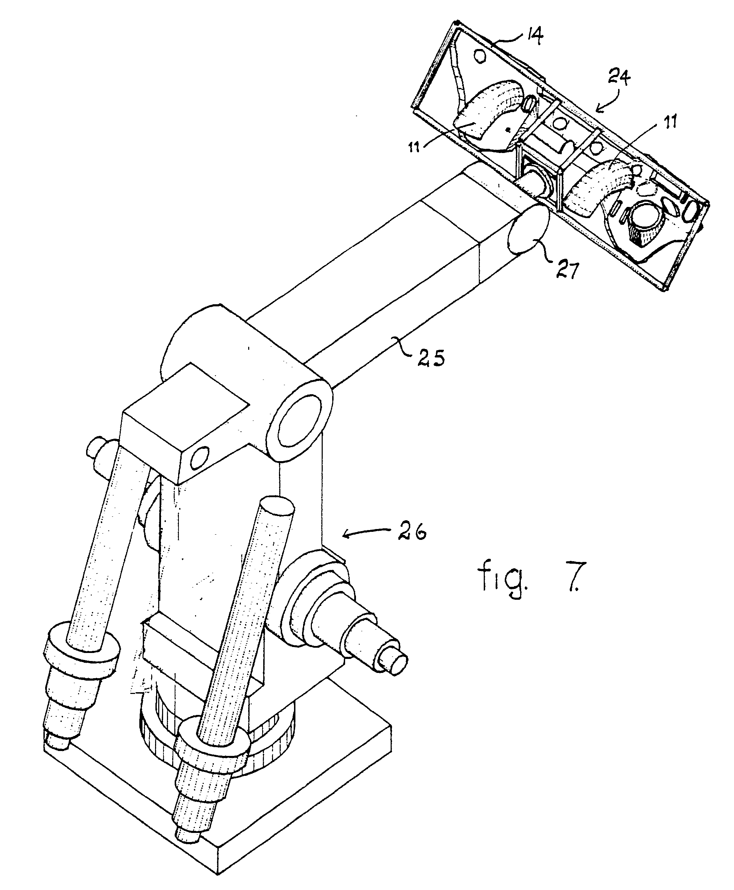

Figures 6 and 7 illustrates the use of a gripper device 24 of the invention mounted on the arm 25 of a robot 26 for use in the automatic unloading of part 1 from the lower tool 22 of a mould 20. The gripper device of the invention is fitted to the robot wrist 27 by means of four rubber blocks interposed between a faceplate provided on wrist 27 and a cooperating opposed plate mounted on gripper 24. The rubber blocks take up any misalignments between the gripper device and the lower tool 22 of the mould 20. The mould 20 is mounted on a mould carrier 29 which, in turn, is mounted on a rotatable carousel 28, in well-known manner.

## EXAMPLE

The gripper device 24 of the invention was fitted to an ASEA IRB 60/2 ROBOT which has a lifting capacity of 60 kg. The total weight of the gripper device 24 and tubular frame 14 was 17.5 kg.

A high volume low pressure fan was used as a vacuum source. This gave a vacuum of 20 mbar at a flow rate of 1500 m3/hr. Taking the upper surface area of the part 1 to be approximately 0.2 square meters gives a theoretical lifting force of 10 Kg. The vacuum pump was connected to the inlets 11 of the gripper device 24 via two 4 inch flexible tubes.

The robot 26 was placed at a manual unload station at the rotatable carousel 28. Parts 1 were removed from the mould 20 about 3 minutes after PU injection when they were still warm and not fully cured. The part shrunk by approximately 3% when fully cured.

A photo cell which detected that the mould carrier 29 was open and in the unload position was used to trigger the automatic unloading cycle. While the robot 26 was unloading a part, the indexing drive of the carousel 28 was disabled by a relay in a control cabinet of the robot 26.

The robot 26 was programmed by manually driving the robot through the unload cycle using a joystick digitizing points along the path of the gripper device 24.

The gripper device 24 was placed upon the lower tool 22 and covered the part 1 to be removed. Then the air jets around the perimeter were activated and compressed air was fed to the interior of the mould to assist in separating the part 1 from the mould surface. After a 2 second delay the vacuum pump was turned on. The gripper device 24 was maintained over the tool for a further 8 seconds before taking the part off. The gripper device 24 removed the part 1 from the mould by means of a pivoting action which peeled the part off the lower mould tool 22.

Testing of the gripper 24 of the invention was carried out over a 4 week period. All moulded parts 1 were successfully removed from the mould under production conditions. A small percentage of the parts were damaged (about 5%) and had to be reworked. This was caused by the improper application of the mould release agent by the operator.

## Claims

1. A gripping device adapted for removing parts from a mould characterised in that the device comprises a gripping cup (24) having a lower portion (9) the interior of which substantially corresponds in shape with at least an upper portion of the part (1) to be removed from the mould (21) and which is adapted to fit around at least a peripheral part of said upper portion, and at least one vacuum chamber (10) located in an upper portion of the cup and a vacuum inlet (11) communicating with the said vacuum chamber (10).

2. A gripping device as claimed in claim 1, characterised in that [0 the gripping cup (24) contains a plurality of vacuum chambers (10) connected by pipes (11) to a vacuum source.

3. A gripping device as claimed in claim 1 of claims, characterised in that the gripping cup (24) is provided with one or more inwardly directed inserts (15) which are adapted to contact the surface of the moulded part (1) to substantially seal holes (2) in the part (1).

4. A gripping device as claimed in any of the preceeding claims characterised in that the lower portion (9) of the gripping cup (24) is provided with a plurality of inlets (12) located around the periphery of the lower portion (9) through which compressed air may be supplied to the interior of the lower portion (9).

5. A method of removing a part from a mould characterised in that a gripping cup (24) having a lower portion (9) which substantially corresponds in shape with at least an upper portion of the part (1), is applied to the part 1 and said lower portion (9) of the gripping cup (24) is fitted tightly around at least a portion of the periphery of the part (1), vacuum is applied to at least one vacuum chamber (10) located in an-upper portion of the gripping cup (24) and immediately above the part, and the gripping cup is lifted to remove the part from the mould.

6. A method as claimed in claim 5, characterised in that compressed air is fed to the interior of the lower portion (9) of the gripping cup (24) at the same time as vacuum is applied to the vacuum chamber (10).

7. A method of manufacturing a gripping device as claimed in claim 1 characterised in that it comprises the steps of:
    i) preparing a negative shell moulding (4) of an inner half (21) of a moulding tool (20),
    ii) building a layer (5) of material on the upper surface of said negative shell moulding (4),
    iii) taking a positive shell moulding (8) from the negative shell moulding (4), and
    iv) removing said negative shell moulding (4) and layer (5) to leave said positive shell moulding (8) which contains a vacuum chamber (10) corresponding in shape with the layer (5).

8. A method as claimed in claim 7 characterised in that:
    i) the negative shell moulding (4) is prepared by laying one or more layers of glass fibre cloth and resin in the interior of the tool half (21), and after hardening the moulding (4) is removed from the tool;
    ii) a layer (5) of resin material is built on the upper surface of the negative shell moulding (4), voids in the layer (5) being left to coincide with through holes (2) in the part (1) to be moulded;
    iii) a positive shell moulding (8) is prepared by laying one or more layers of glass fibre cloth and resin over the upper surface of the negative moulding (4) and the built-up parts (5), and, after hardening of the resin, the negative moulding (4) with built-up parts (5) are detached to leave the positive shell moulding (8).

fig    1

fig. 2

fig 3A

fig 3B

fig 3C

fig 3D

fig. 4

fig. 5

fig. 6

EP 0 416 957 A2

fig. 7